# EUROPEAN PATENT SPECIFICATION

(11) **EP 1 269 421 B1**
(45) Date of publication and mention of the grant of the patent: **20.05.2009**
(21) Application number: 01906090.4
(22) Date of filing: 19.02.2001
(51) Int. Cl.: G07B 15/02, G07F 7/00

(54) **VEHICLE RELATED SERVICES SYSTEM AND METHODOLOGY**
FAHRZEUGBEZOGENES DIENSTLEISTUNGSSYSTEM UND VERFAHREN
PROCEDE ET SYSTEME DE SERVICES LIES A UN VEHICULE

(30) Priority: 27.03.2000 US 192199 P; 03.12.2000 IL 14004700; 07.12.2000 US 731643
(43) Date of publication of application: 02.01.2003
(73) Proprietor: PDM Co. Ltd., Belize City (BZ)
(72) Inventor: DAR, Yair, 76885 Moshav Gealia (IL); DAR, Ofer, 76885 Moshav Gealia (IL)
(74) Representative: Evens, Paul Jonathan
(86) International application number: PCT/IL2001/000155
(87) International publication number: WO 2001/073693

(56) References cited:
- EP-A- 0 952 557
- EP-A- 0 952 557
- WO-A-00/11616
- WO-A-97/13222
- US-A- 5 359 528
- US-A- 5 422 624
- US-A- 5 694 322
- US-A- 5 737 710
- US-A- 5 797 134
- US-A- 5 914 654
- US-A- 5 917 434

## Description

### FIELD OF THE INVENTION

The present invention relates to systems and methodologies for providing, and effecting payment for, vehicle-related services in general and particularly for vehicle parking services.

### BACKGROUND OF THE INVENTION

The U.S. patent literature contains a great number of patents related to systems and methodologies for providing and effecting payment for vehicle-related services.

The following U.S. patents and published PCT applications are believed to represent the state of the art with regard to systems and methodologies for providing and effecting payment for vehicle parking services:
4,555,618; 4,876,540; 4,908,500; 4,958,064; 5,029,094; 5,034,739; 5,072,380; 5,153,559; 5,173,833; 5,266,947; 5,283,622; 5,339,000; 5,351,187; 5,414,624; 5,432,508; 5,442,348; 5,659,306; 5,710,557; 5,710,743; 5,737,710; 5,745,052; 5,748,107; 5,751,973; 5,796,084; 5,809,480; 5,819,234; 5,845,268; 5,877,704; 5,905,247; 5,910,782; 5,914,654; 5,926,546; 5,940,481; 5,980,185; 5,991,749; 6,028,550; 6,037,880; 6,061,002; 6,085,124.
WO 93/20539; WO 97/13222A1.

The following U.S. Patents are believed to represent the state of the art with retard to systems and methodologies for providing and effecting payment for other types of vehicle-related services:
4,533,962; 4,843,463; 5,210,702; 5,223,844; 5,319,374; 5,359,528; 5,422,624; 5,499,181; 5,499,182; 5,550,551; 5,583,765; 5,612,875; 5,621,166; 5,635,693; 5,642,484; 5,694,322; 5,717,374; 5,742,915; 5,797,134; 5,831,742; 5,862,500; 5,864,831; 5,914,654; 5,954,773; 5,963,129; 5,970,481; 5,974,356; 5,995,898; 6,006,148; 6,064,970; 6,067,008; 6,112,152.
US-A-5,694,322 diocloses method and apparatus for determining tax of a vehicle using positioning technology.
US-A-5,917,434 discloses an integrated taximeter/GPS position tracking system.
US-A-5,797,134 discloses a vehicle monitoring system for determining a cost of insurance based upon monitoring recording and communicating data representative of operator and vehicle driving characteristics.

### SUMMARY OF THE INVENTION

The present invention seeks to provide improved, simplified and highly cost effective systems and methodologies for providing and effecting payment for vebicle-related services.

Aspects of the present invention are defined in the appended independent claims, to which reference should now be made. Embodiments of the invention are defined in the appended dependent claims, to which reference should now also be made.

One aspect of the present invention provides a vehicle-related fee payment system, comprising: at least one sensor mounted on a vehicle and automatically sensing at least the time during which said vehicle is being operated; at least one communicator mounted on said vehicle providing an output indicating at least the time during which said vehicle is being operated; and at least one data processor receiving said output from said at least one communicator, and providing a billing data output in respect of a vehicle-related use fee which is dependent on the time during which said vehicle is being operated, wherein the only variables sensed by the at least one sensor, which are considered in the billing data, are duration of vehicle use and time of day or night of vehicle use.

The data processor may include a vehicle insurance billing data processor. In such a case, the billing data includes vehicle insurance billing data wherein the only variables, sensed by the on-board vehicle sensor, which are considered in the billing data are duration of vehicle operation and time of day or night of vehicle operation. The billing data may include vehicle insurance billing data wherein the billing data is not dependent on vehicle speed.

Preferably, the communicator communicates with the at least one data processor at least partially not in real time.

In accordance with a preferred embodiment of the present invention, the communicator communicates with an intermediate storage and communication unit only when a vehicle in which the communicator is located is at one of a plurality of predetermined locations.

Preferably, the intermediate storage and communication unit is located at a vehicle fueling station.

Preferably, the sensor is operative to sense the time during which a vehicle is not being operated without requiring interaction with an indicating device fixed in propinquity to vehicle location.

In accordance with a preferred embodiment of the present invention, the data processor may include a vehicle insurance billing data processor. In such a case, the billing data includes vehicle insurance billing data wherein the only variables, sensed by the at least one on-board vehicle sensor, which are considered in the billing data are duration of vehicle operation and time of day or night of vehicle operation.

In accordance with a preferred embodiment of the present invention, the at least one sensor is operative to sense the time during which a vehicle is being operated without requiring interaction with an indicating device fixed in propinquity to the location.

In accordance with a preferred embodiment of the present invention, the billing data output is dependent on the time during which the vehicle is being operated and on a level of pollution being created by the vehicle.

In accordance with a preferred embodiment of the present invention, the billing data includes vehicle insurance billing data wherein the only automatically sensed variables which are considered in the billing data are duration of vehicle operation and time of day or night of vehicle operation.

Preferably in all embodiments of the invention, the sensor automatically senses the time of day and date when the vehicle is not being operated.

Additionally or alternatively in all embodiments of the invention, the sensor automatically senses the time duration during which the vehicle is not being operated.

It is appreciated that the various embodiments described hereinabove may be employed individually or alternatively any suitable combination of such embodiments may be employed.

### BRIER DESCRIPTION OF THE DRAWING

The present invention will be understood and appreciated more fully from the following detailed description, taken in conjunction with the drawings in which:
Figs. 1A, 1B and 1C are simplified pictorial illustrations of three alternative vehicle-related services payment systems and methodologies, Figure 1A and 1B being constructed and operative in accordance with a preferred embodiment of the present invention;
Figs. 2A, 2B and 2C are simplified block diagram illustrations of three alternative payment systems and methodologies corresponding to Figs. 1A, 1B and 1C respectively;
Figs. 3A, 3B and 3C are simplified flow charts illustrating the operation of the three alternative payment systems and methodologies of Figs. 1A and 2A, 1B and 2B and 1C and 2C respectively;
Figs. 4A, 4B and 4C are simplified pictorial illustrations of vehicle fee payment systems and methodologies;
Figs. 5A, 5B and 5C are simplified block diagram illustrations of vehicle fee payment systems and methodologies corresponding to Figs. 4A, 4B and 4C respectively;
Figs. 6A, 6B and 6C are simplified flow charts illustrating the operation of vehicle fee payment systems and methodologies of Figs. 4A and 5A, 4B and 5B and 4C and 5C respectively;

### DETAILED DESCRIPTION OF PREFERRED EMBODIMENTS

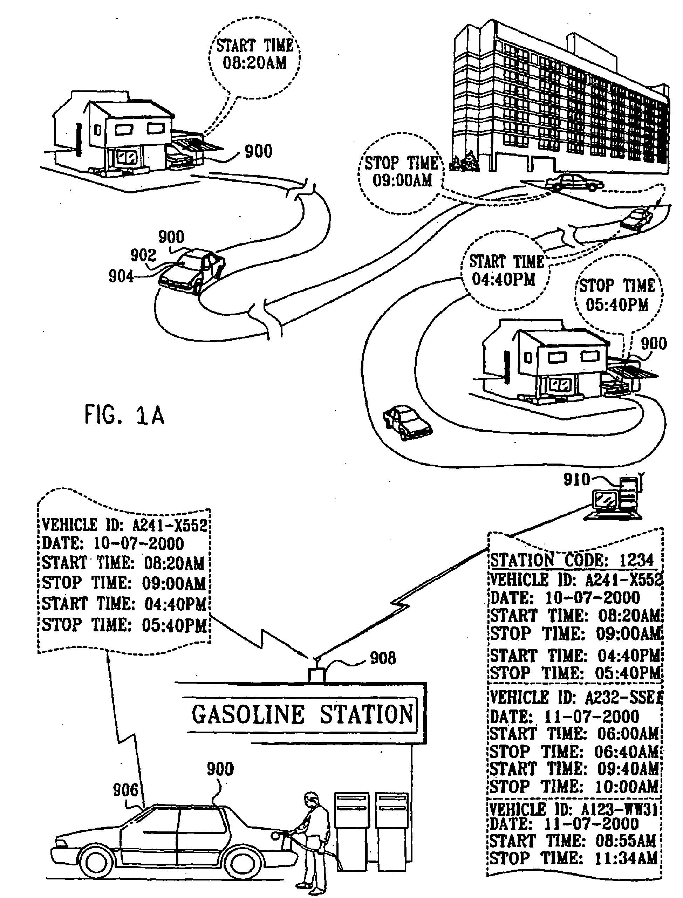

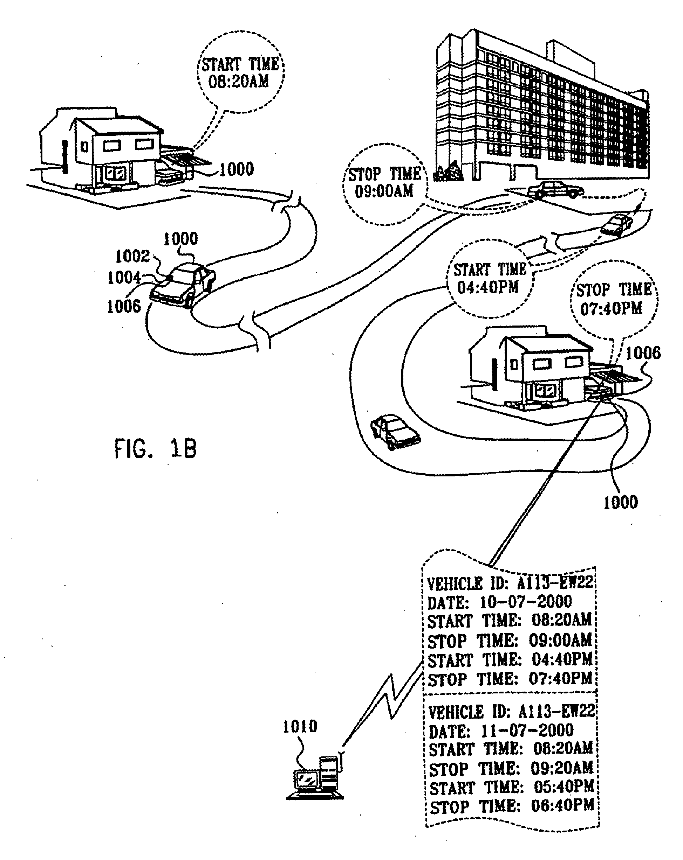

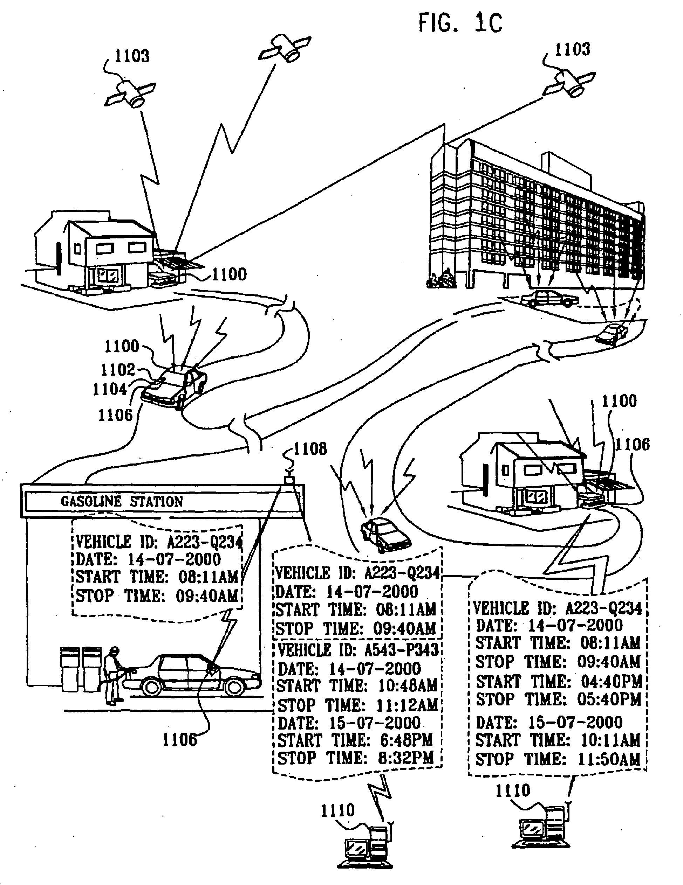

Reference is now made to Figs. 1A, 1B and 1C, which are simplified pictorial illustrations of three alternative vehicle-related services payment systems and methodologies with those of Figs 1A and 1B being constructed and operative in accordance with a preferred embodiment of the present invention. The systems may be **characterized in that** the payment in respect of a vehicle-related service is dependent on at least one of whether and when the vehicle is being operated.

Important examples of such systems and methodologies includes vehicle insurance billing and vehicle fee payment systems wherein the only variables sensed by an on-board vehicle sensor, which are considered in the billing data are duration of vehicle use and time of day or night of vehicle use. Other types of such systems and methodologies are also within the scope of the present invention.

Turning now to Fig. 1A, there is seen a vehicle 900 equipped with vehicle movement or other vehicle operation determining sensor 902. Sensor 902 is typically a vibration sensor, an electrical or acoustic motor operation sensor or a driver presence sensor. Sensor 902 need not necessarily be connected to the electrical system of the vehicle 900.

Without requiring any intervention by the driver, the times when a driver moves the vehicle 900 and subsequently parks the vehicle 900 are recorded in a memory 904, which may store a series of vehicle operation start and stop records.

As illustrated in Fig. 1A, when the vehicle 900 is located at one of a multiplicity of predetermined download locations, such as a suitably equipped filling station, an on-board communicator 906 downloads data stored in memory 904 and relating to a plurality of vehicle operation start and stop events, typically in a wireless manner, to an intermediate storage and communication unit 908, typically located at the filling station. The intermediate storage and communication unit 908 preferably receives and stores data relating to a plurality of vehicle operation start and stop events in respect of a multiplicity of vehicles and communicates this data, in a composite message, preferably in a wireless manner, to a central unit 910. Alternatively or additionally, download locations may be found at other locations, such as road intersections, parking lots and malls.

Typically, the composite message may be transmitted at any time from the intermediate storage and communication unit 908 to the central unit 910. Such a composite message typically includes messages relating to a plurality of vehicle operation start and stop events for a multiplicity of different vehicles. In respect of each such event, the message typically includes data relating to the identity of the vehicle, the date, the start time of vehicle operation and the stop time of vehicle operation.

Composite messages may be transmitted at predetermined times or upon accumulation of data relating to a predetermined number of events or based on any other suitable criterion or combination of criteria.

Turning now to Fig. 1B, there is seen a vehicle 1000 equipped with a movement or operation determining sensor 1002. Sensor 1002 is typically a vibration sensor, an electrical or acoustic motor operation sensor or a driver presence sensor. Sensor 1002 need not necessarily be connected to the electrical system of the vehicle 1000.

Without requiring any intervention by the driver, the times when a driver moves the vehicle 1000 and subsequently parks the vehicle 1000 are recorded in a memory 1004, which may store a series of vehicle operation start and stop records.

As illustrated in Fig. 1B, an on-board communicator 1006 downloads data stored in memory 1004 and relating to a plurality of vehicle operation start and stop events, in a composite message, preferably in a wireless manner to a central unit 1010.

Typically, the composite message may be transmitted at any time from the communicator 1006 to the central unit 1010. Such a composite message typically includes messages relating to a plurality of vehicle operation start and stop events. In respect of each such event, the message typically includes data relating to the identity of the vehicle, the date, the start time of vehicle operation and the stop time of vehicle operation.

Composite messages may be transmitted at predetermined times or upon accumulation of data relating to a predetermined number of events or based on any other suitable criterion or combination of criteria.

Turning now to Fig. 1C, there is seen a vehicle 1100 equipped with a GPS receiver 1102 receiving inputs from satellites 1103 or a similar location determining devices. The GPS receiver 1102 senses when the location of the vehicle changes.

Without requiring any intervention by the driver, the times when a driver moves the vehicle 1100 and subsequently parks the vehicle 1100 are recorded in a memory 1104, which may store a series of vehicle operation start and stop records.

As illustrated in Fig. 1C, an on-board communicator 1106 downloads data stored in memory 1104 and relating to a plurality of vehicle operation start and stop events, in a composite message, preferably in a wireless manner to a central unit 1110.

Typically, the composite message may be transmitted at any time from the communicator 1106 to the central unit 1110. Such a composite message typically includes messages relating to a plurality of vehicle operation start and stop events. In respect of each such event, the message typically includes data relating to the identity of the vehicle, the date, the start time of vehicle operation and the stop time of vehicle operation.

Composite messages may be transmitted at predetermined times or upon accumulation of data relating to a predetermined number of events or based on any other suitable criterion or combination of criteria.

Additionally or alternatively, communicator 1106 may communicate with the central unit 1110 via an intermediate storage and communication unit 1108, much in the same way as described hereinabove with reference to Fig. 1A.

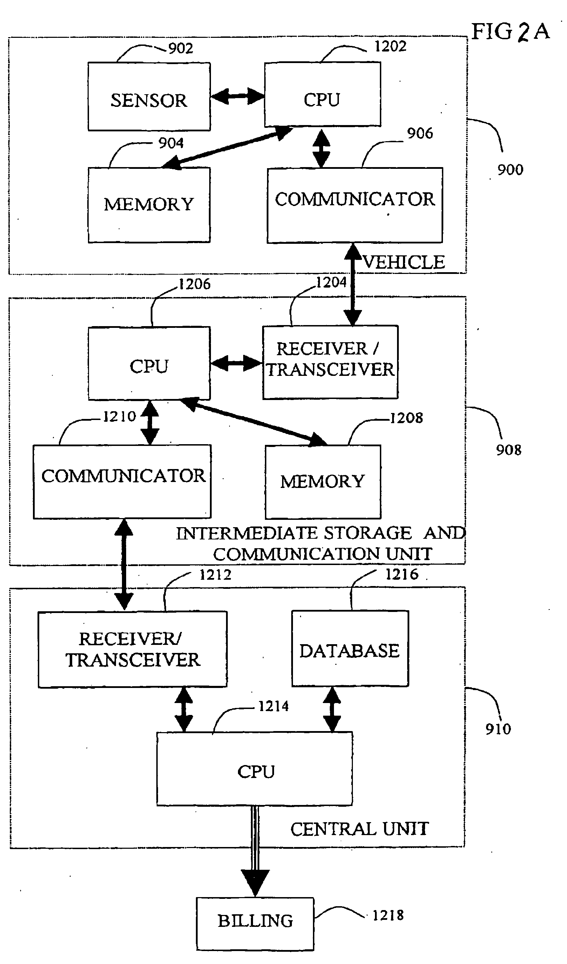

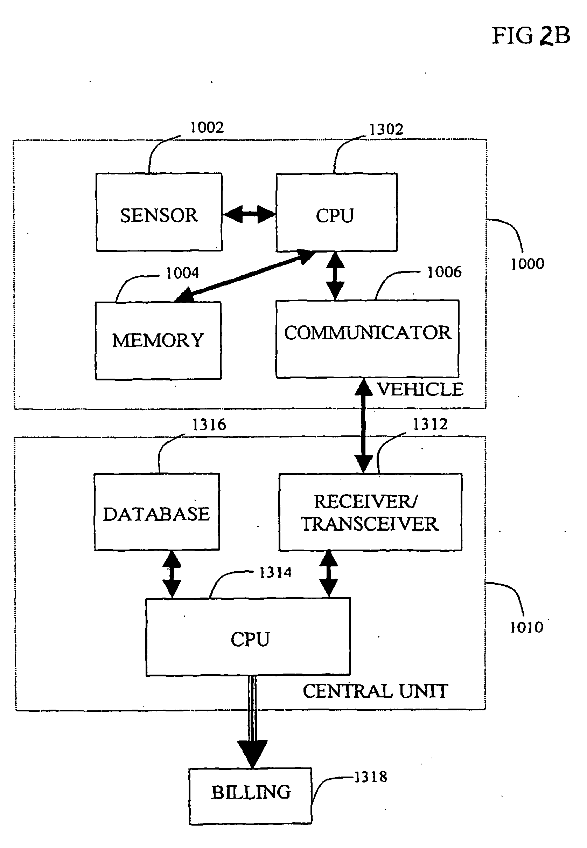

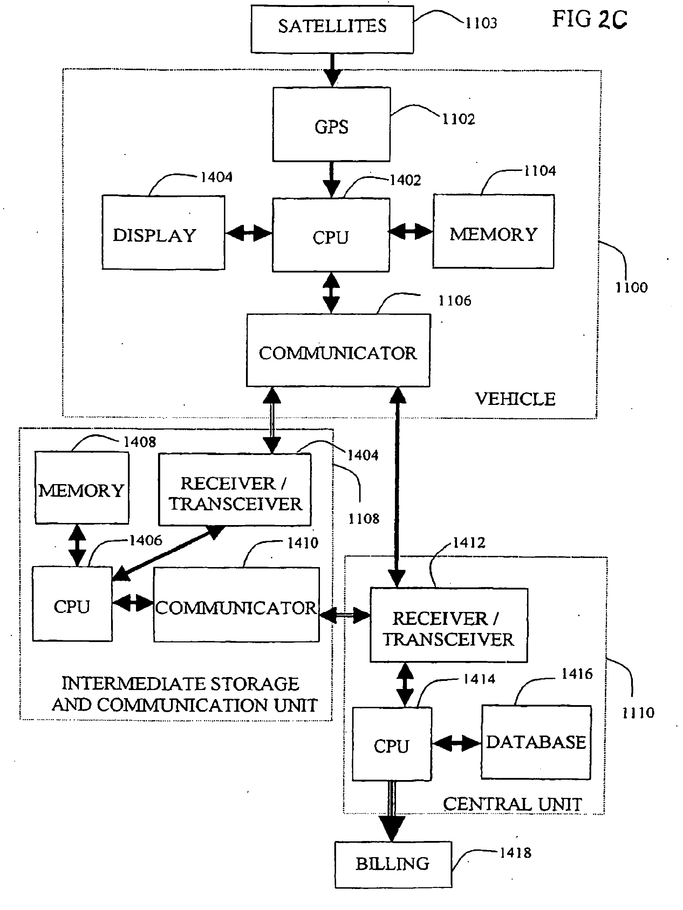

Reference is now made to Figs. 2A, 2B and 2C, which are simplified block diagram illustrations of three alternative vehicle-related services payment systems and methodologies corresponding to Figs. 1A, 1B and 1C respectively.

Turning now to Fig. 2A, it is seen that vehicle 900 includes a CPU 1202, which interfaces with movement or operation determining sensor 902, memory 904 and on-board communicator 906.

As illustrated in Fig. 2A, when the vehicle 900 is located at one of a multiplicity of predetermined download locations, such as a suitably equipped filling station, on-board communicator 906 downloads data stored in memory 904 relating to a plurality of vehicle operation start and stop events, typically in a wireless manner, to intermediate storage and communication unit 908. The intermediate storage and communication unit 908 includes a receiver or transceiver 1204 which interfaces with a CPU 1206. The CPU 1206 interfaces with a memory 1208 which stores data relating to a plurality of vehicle operation start and stop events in respect of a multiplicity of vehicles and with a communicator 1210, which communicates this data, in a composite message, preferably in a wireless manner to central unit 910.

Central unit 910 preferably includes a receiver or transceiver 1212 which interfaces with a CPU 1214. The CPU 1214 in turn interfaces with a database 1216. The database 1216 accumulates the content of the composite messages received by the central unit 910 and supplies this content in an appropriate form to a billing system 1218. The billing system 1218 may take into account appropriate additional criteria, such as, for example in the case of insurance, the age and driving experience of a driver and various characteristics of the vehicle or in the case of vehicle-related fees, the type end weight of the vehicle.

Turning now to Fig. 2B, it is seen that vehicle 1000 includes a CPU 1302, which interfaces with movement or operation determining sensor 1002, memory 1004 and on-board communicator 1006.

As illustrated in Fig. 2B, on-board communicator 1006 downloads data stored in memory 1004 and relating to one or more vehicle operation start and stop events, typically in a wireless manner, to central unit 1010. Central unit 1010 preferably includes a receiver or transceiver 1312 which interfaces with a CPU 1314, The CPU 1314 in turn interfaces with a database 1316. The database 1316 accumulates the content of the composite messages received by the central unit 1010 and supplies this content in an appropriate form to a billing system. 1318.

Turning now to Fig. 2C, it is seen that vehicle 1100 includes a GPS receiver 1102 receiving inputs from satellites 1103. GPS receiver 1102 outputs to a CPU 1402 which interfaces with memory 1104 and with an optional display 1404. CPU also interfaces with on-board communicator 1106.

As illustrated in Fig. 2C, when the vehicle 1100 is located at one of a multiplicity of predetermined download locations, such as a suitably equipped filling station, on-board communicator 1106 downloads data stored in memory 1104 and relating to a plurality of vehicle operation start and stop events, typically in a wireless manner, to intermediate storage and communication unit 1108. The intermediate storage and communication unit 1108 includes a receiver or transceiver 1404 which interfaces with a CPU 1406. The CPU 1406 interfaces with a memory 1408 which stores data relating to a plurality of vehicle operation start and stop events in respect of a multiplicity of vehicles and with a communicator 1410, which communicates this data, in a composite message, preferably in a wireless manner to central unit 1110. Central unit 1110 preferably includes a receiver or transceiver 1412 which interfaces with a CPU 1414. The CPU 1414 in turn interfaces with a database 1416. The database accumulates the content of the composite messages received by the central unit 1110 and supplies this content in an appropriate form to a billing system 1418.

Additionally or alternatively, communicator 1106 may communicate directly with the central unit 1110, bypassing the intermediate storage and communication unit 1108. In such a case, units 1108 may be obviated.

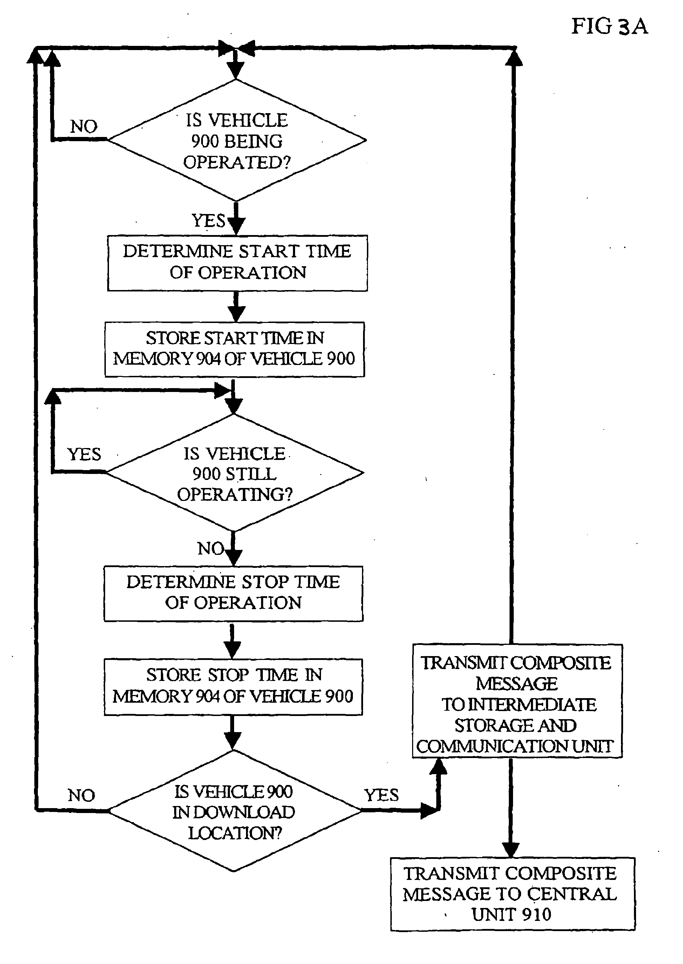

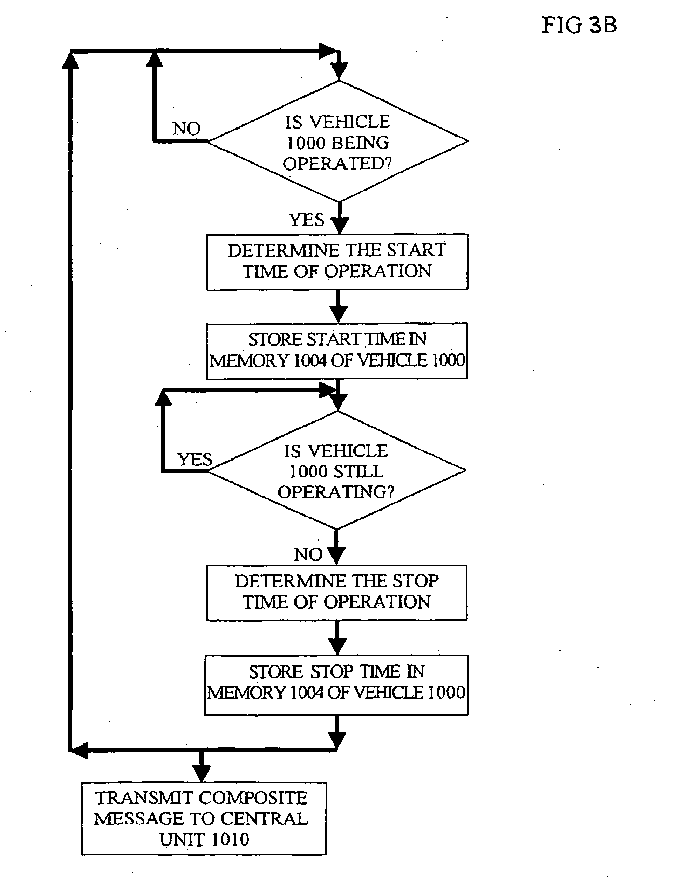

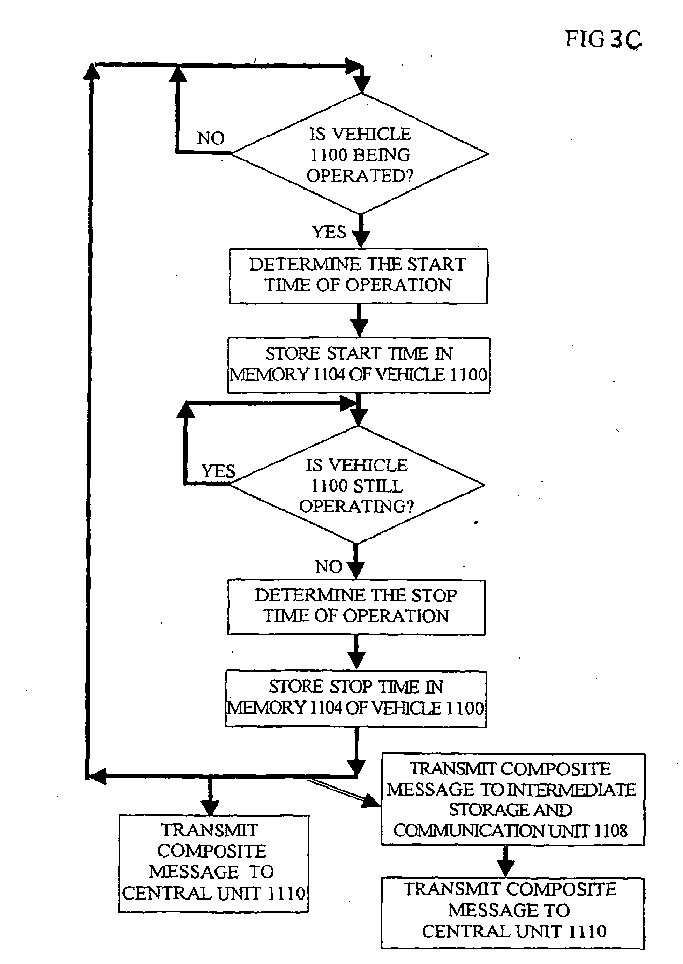

Reference is now made to Figs. 3A, 3B and 3C, which are simplified flow charts illustrating the operation of the three alternative payment systems and methodologies of Figs. 1A and 2A, 1B and 2B and 1C and 2C, respectively.

Turning now to Fig. 3A, it is seen that a determination of whether vehicle 900 is being operated is made repeatedly. If the vehicle is being operated, a determination of the start time of vehicles operation is made and the start time is stored in memory 904.

While the vehicle is operating, a determination of whether vehicle 900 is still being operated is made repeatedly. If the vehicle ceases operation for at least a predetermined time, typically 5 minutes, a determination of the stop time of vehicle operation is made and the stop time is stored in memory 904.

At any suitable time when the vehicle is located at a suitable download location, whether the vehicle is operating or not operating, the contents of the memory 904 may be downloaded to the intermediate storage and communication unit 908 and thence to the central unit 910.

Turning now to Fig. 3B, it is seen that a determination of whether vehicle 1000 is being operated is made repeatedly. If the vehicle is being operated, a determination of the start time of vehicle operation is made and the start time is stored in memory 1004.

While the vehicle is operating, a determination of whether vehicle 1000 is still being operated is made repeatedly. If the vehicle ceases operation for at least a predetermined time, typically 5 minutes, a determination of the stop time of vehicle operation is made and the stop time is stored in memory 1004.

At any suitable time, whether the vehicle is operating or not operating, the contents of the memory 1004 may be downloaded to the central unit 1010..

Turning now to Fig. 3C, it is seen that a determination of whether vehicle 1100 is being operated is made repeatedly. If the vehicle is being operated, a determination of the start time of vehicle operation is made and the start time is stored in memory 1104.

While the vehicle is operating, a determination of whether vehicle 1100 is still being operated is made repeatedly. If the vehicle ceases operation for at least a predetermined time, typically 5 minutes, a determination of the stop time of vehicle operation is made and the stop time is stored in memory 1104.

At any suitable time, whether the vehicle is operating or not operating, the contents of the memory 1104 may be downloaded directly to central unit 1110. Alternatively, the contests of memory 1104 may be downloaded via the intermediate storage and communication unit 1108 to the central unit 1110 when the vehicle is at a suitable download location.

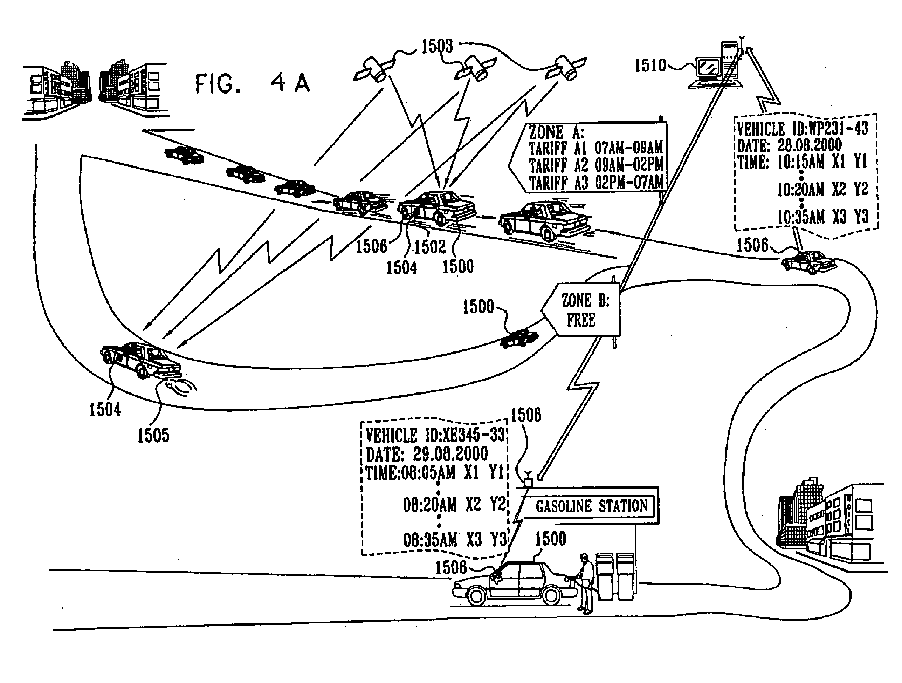

Reference is now made to Figs. 4A 4B and 4C, which are simplified pictorial illustrations of vehicle fee payment systems and methodologies.

The systems of Figs. 4A - 4C may be employed for modulating traffic over given roads at given times or on given days. Thus, as appropriate, travel over certain routes may require payment of a fee, whereas travel over other alternative routes may require payment of a lesser fee or no fee at all.

It will be appreciated that the systems of Figs 4A- 4C may also be employed for collecting user fees on toll roads. The systems of Figs. 4A- 4C may additionally be employed for collecting fees for entry into certain regions, such as areas of a city. Such fees may apply only at certain times or days and may vary from time to time or day to day.

Additionally, the system of Figs. 4A - 4C may be employed for collecting fees that are duration-based, solely or in combination with other time, date and/or location criteria. Thus, for example the fees payable may be a function not only of the time of day or date of entry, but also of the time duration that the vehicle is operating within a restricted area.

Fig. 4A shows a GPS based system wherein vehicles 1500 are each equipped with a GPS receiver 1502 which receives location inputs from satellites 1503. GPS receiver 1502 senses the location of each vehicle 1500 over time and provides an output indication of vehicle location as a function of time, which is preferably stored in a memory 1504 located in the vehicle 1500. The contents of the memory 1504 thus provide a record of whether the vehicle is being operated and where it has been traveling, without requiring or permitting driver intervention.

One or more of vehicles 1500 may also include vehicle operation monitors, such as a pollution monitor 1505. The output of the vehicle operation monitor, such as pollution monitor 1505 may also be stored in memory 1504.

As illustrated in Fig. 4A, an on-board communicator 1506 downloads data stored in memory 1504 and relating to vehicle operations over a time period extending from the preceding download, in a composite message, preferably in a wireless manner to a central unit 1510.

Typically, the composite message may be transmitted at any time from the communicator 1506 to the central unit 1510. The message typically includes data relating to the identity of the vehicle and the location of the vehicle during vehicle operation.

Composite messages may be transmitted at predetermined times or upon accumulation of data relating to a predetermined number of events or based on any other suitable criterion or combination of criteria.

Additionally or alternatively, communicator 1506 may communicate with the central unit 1510 via an intermediate storage and communication unit 1508, much in the same way as described hereinabove with reference to Fig. 1A.

It is appreciated that the functionality of Fig. 4A may also be applicable in vehicle insurance payment systems.

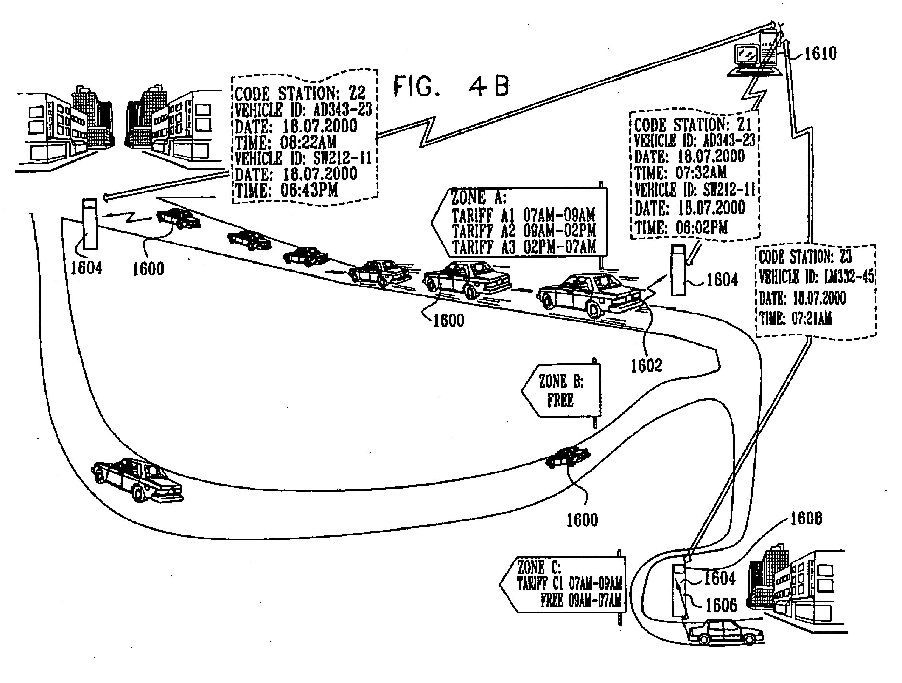

Fig. 4B shows a fixed infrastructure based system wherein vehicles 1600 are each equipped with a transmitter 1602, which transmits a wireless coded signal identifying the vehicle. Without requiring any intervention by the driver, the coded signal transmitted by transmitter 1602 is received by suitably located travel monitors 1604 which are preferably located in general-propinquity to entrances to and exits from restricted or fee bearing locations. Such locations may be, for example, roads as shown in Fig. 4B or alternatively regions of a city where access is restricted or requires the payment of a fee.

The travel monitor 1604 senses the identity of each vehicle 1600 in suitable propinquity thereto and provides an output indication of the sensed vehicle presence at a given time, which is preferably stored in a memory 1606, preferably located at the travel monitor 1604. The combined contents of memories 1606 at suitably located travel monitors 1604 thus provide a record of where and when a vehicle has been or is traveling in a monitored travel space, without requiring or permitting driver intervention.

It may be appreciated that suitable location of travel monitors 1604 at the entrances and exits of roads may enable accurate and efficient collection of fees on roads and suitable location of travel monitors 1604 on access arteries to given regions may enable accurate and efficient collection of fees for access to such restricted or fee bearing areas.

As illustrated in Fig. 4B, a communicator 1608 associated with each travel monitor 1604 downloads data stored in memory 1606 and relating to vehicle operations over a time period extending from the preceding download, in a composite message, preferably in a wireless manner to a central unit 1610.

Typically, the composite message may be transmitted at any time from the communicator 1608 to the central unit 1610. The message typically includes data relating to the identity of the vehicle, the date and the time vehicle presence is sensed as well as the identity of the travel monitor 1604, which, of course, indicates its location.

Composite messages may be transmitted at predetermined times or upon accumulation of data relating to a predetermined number of events or based on any other suitable criterion or combination of criteria.

The central unit 1610 preferably employs the information contained in the composite messages received by it from various travel monitors 1604 to compute fees chargeable to individual vehicles, which are based, inter alia, on time duration of vehicle presence within given regions.

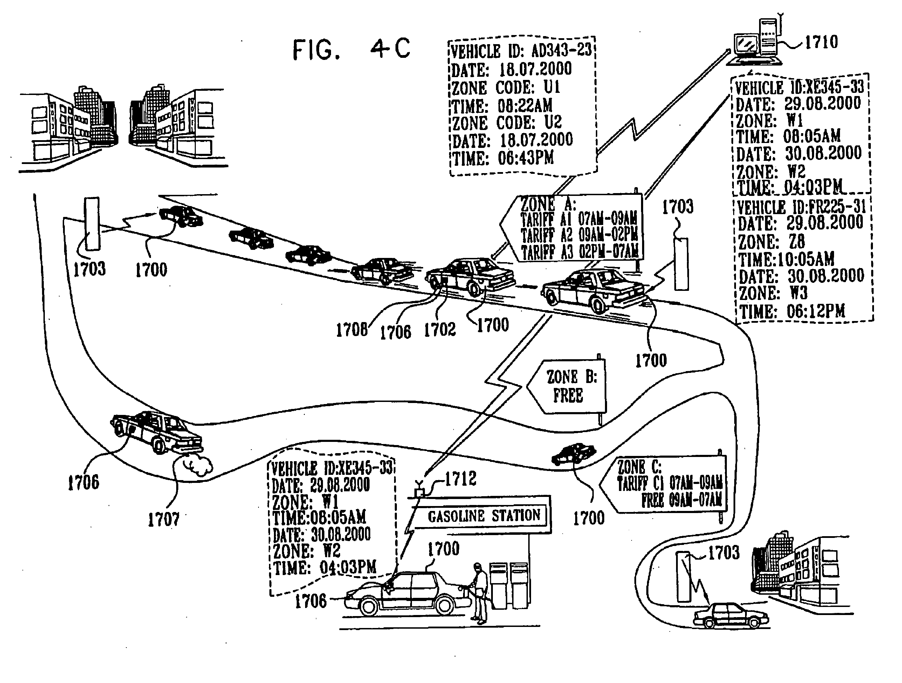

Fig. 4C shows a system wherein vehicles 1700 are each equipped with a receiver 1702 which receives coded location input signals from fixed local transmitters 1703. Receivers 1702 thus sense the presence of the vehicle 1700 at a given location at a given time.

The coded signals are transmitted by transmitters 1703 which are preferably located in general propinquity to entrances and exits from restricted or fee bearing locations. Such locations may be, for example, roads as shown in Fig. 4C or alternatively regions of a city where access is restricted or requires the payment of a fee.

The receiver 1702 senses the identity of each transmitter 1703 as the vehicle 1700 passes in suitable propinquity thereto and provides an output indication of the sensed vehicle presence at a given location at a given time, which is preferably stored in a memory 1706, located on-board the vehicle 1700. The contents of memory 1706 thus provide a record of where and when a vehicle has been or is traveling in a monitored travel space, without requiring or permitting driver intervention.

One or more of vehicles 1700 may also include vehicle operation monitors, such as a pollution monitor 1707. The output of the vehicle operation monitor, such as pollution monitor 1707 may also be stored in memory 1706. Vehicle operation monitors may be any suitable vehicle operation monitors, such as, for example, an on-board vehicle pollution monitor such as that described in U.S. Patent 5,583,765, the disclosure of which is hereby incorporated by reference. It is appreciated that vehicle pollution over a given level may involve payment of a fee, which may be collected automatically by means of the system of Figs. 4A and 4C.

As illustrated in Fig. 4C, an on-board communicator 1708 downloads data stored in memory 1706 and relating to vehicle operations over a time period extending from the preceding download, in a composite message, preferably in a wireless manner to a central unit 1710.

Typically, the composite message may be transmitted at any time from the communicator 1708 to the central unit 1710. The message typically includes data relating to the identity of the vehicle, the date and the time that the vehicle 1700 passes within predetermined propinquity of each of transmitters 1703.

Composite messages may be transmitted at predetermined times or upon accumulation of data relating to a predetermined number of events or based on any other suitable criterion or combination of criteria.

Additionally or alternatively, communicator 1706 may communicate with the central unit 1710 via an intermediate storage and communication unit 1712, much in the same way as described hereinabove with reference to Fig. 1A

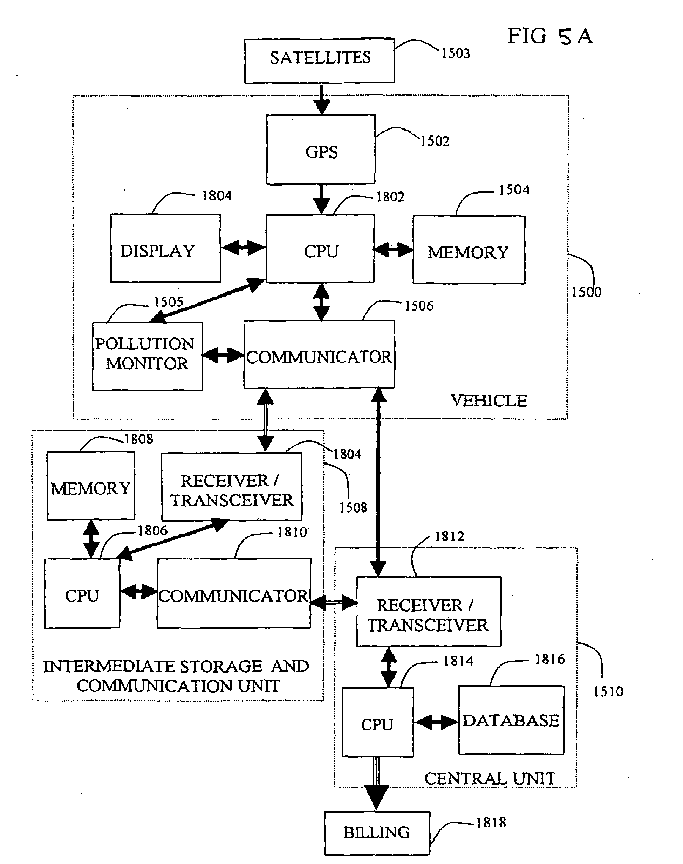

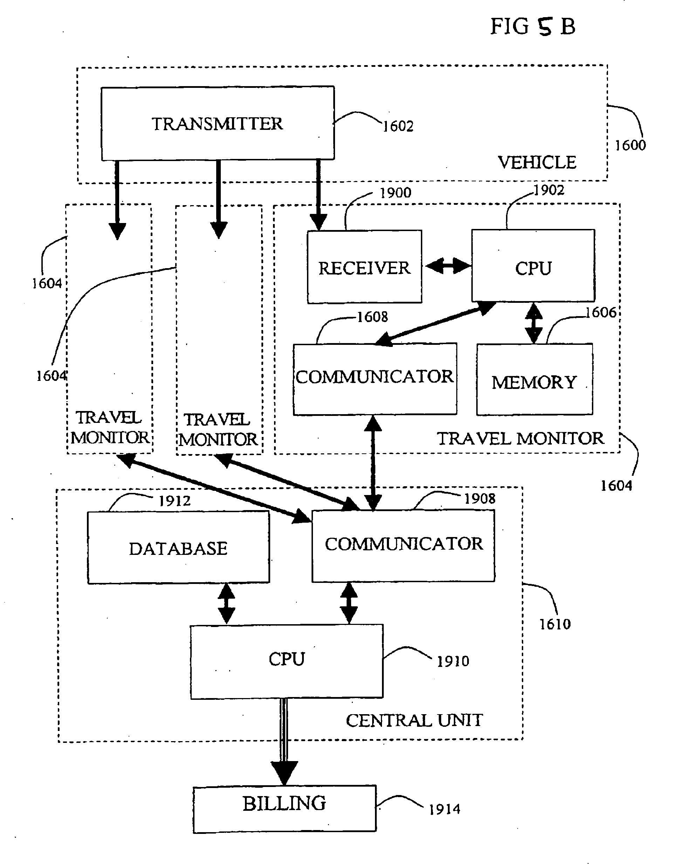

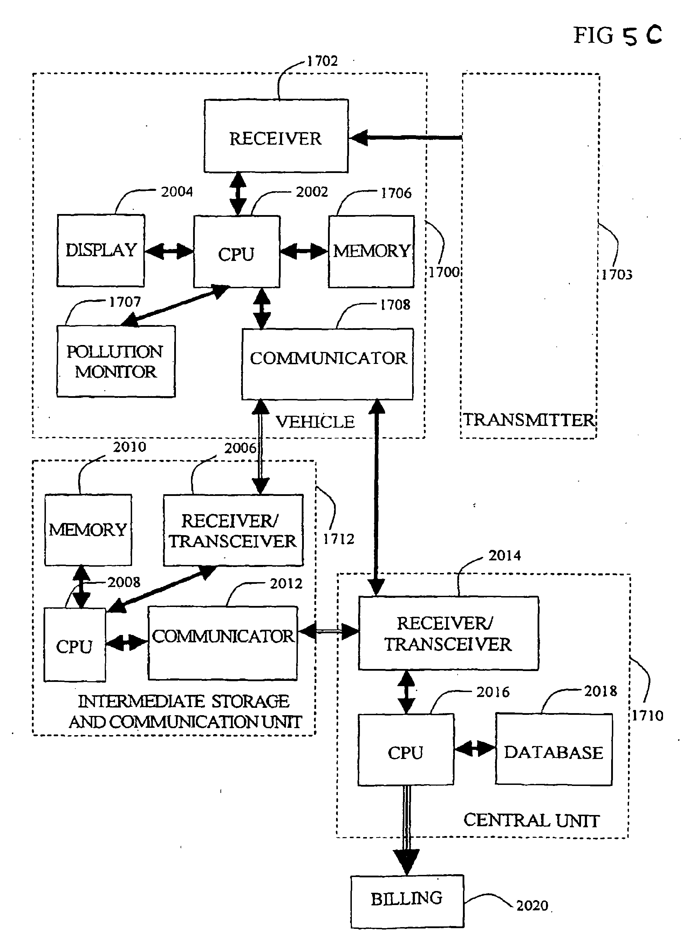

Reference is now made to Figs. 5A, 5B and 5C which are simplified block diagram illustration of vehicle fee payment systems and methodologies corresponding to Figs. 4A, 4B and 4C respectively.

Turning now to Fig. 5A, it is seen that vehicle 150D includes a GPS receiver 1502 receiving inputs from satellites 1503. GPS receiver 1502 outputs to a CPU 1802 which interfaces with memory 1504 and with an optional display 1804. CPU also interfaces with on-board communicator 1506 and with a vehicle operation monitor, such as pollution monitor 1505.

As illustrated in Fig. 5A. when the vehicle 1500 is located at one of a multiplicity of predetermined download locations, such as a suitably equipped filling station, on-board communicator 1506 downloads data stored in memory 1504 and relating to vehicle operations over a time preferably extending since a previous download, typically in a wireless manner, to intermediate storage and communication unit 1508. The intermediate storage and communication unit 1508 includes a receiver or transceiver 1804 which interfaces with a CPU 1806. The CPU interfaces with a memory 1808 which stores data relating to vehicle operations in respect of a multiplicity of vehicles and with a communicator 1810, which communicates this data, in a composite message, preferably in a wireless manner, to central unit 1510.

Central unit 1510 preferably includes a receiver or transceiver 1812 which interfaces with a CPU 1814. The CPU 1814 in turn interfaces with a database 1816. The database accumulates the content of the composite messages received by the central unit 1510 and supplies this content in an appropriate form to a billing system 1818.

Additionally or alternatively, communicator 1506 may communicate directly with the central unit. 1510, bypassing the intermediate storage and communication unit 1508. In such a case, units 1508 may be obviated.

Fig. 5B shows that vehicle 1600 includes transmitter 1602, which transmits a wireless coded signal identifying the vehicle, without requiring any intervention by the driver.

The coded signal transmitted by transmitter 1602 is received by travel monitors 1604 which are located in general propinquity to entrances and exits from restricted or fee bearing locations. Such locations may be, for example, roads as shown in Fig. 4B or alternatively regions of a city where access is restricted or requires the payment of a fee.

Each travel monitor 1604 preferably includes a receiver 1900 which interfaces with a CP.U 1902. CPU 1902 interfaces with memory 1606 and with communicator 1608.

As illustrated in Fig. 5B, communicator 1608 associated with each travel monitor 1604 downloads data stored in memory 1606 and relating to vehicle operations over a time period extending from the preceding download, in a composite message, preferably in a wireless manner, to central unit 1610.

Typically, the composite message may be transmitted at any time from the communicator. 1608 to the central unit 1610. The message typically includes data relating to the identity of the vehicle, the date and the time vehicle presence is sensed as well as the identity of the travel monitor 1604, which, of course, indicates its location.

Composite messages may be transmitted at predetermined times or upon accumulation of data relating to a predetermined number of events or based on any other suitable criterion or combination of criteria.

The central unit 1610 preferably employs the information contained in the composite messages received by it from various travel monitors 1604 to compute fees chargeable to individual vehicles, which are based, inter alia, on time duration of vehicle presence within given regions.

Central unit 1610 typically includes a communicator 1908 which interfaces with a CPU 1910. CPU 1910 preferably interfaces with a database 1912 and outputs to a billing system 1914. Communication between communicators 1608 and 1908 may be wired or wireless.

Turning now to Fig. 5C, it is seen that vehicle 1700 includes a receiver 1702 receiving inputs from transmitters 1703. Receiver 1702 outputs to a CPU 2002 which interfaces with memory 1706 and with an optional display 2004. CPU 2002 also interfaces with on-board communicator 1708 and with a vehicle operation monitor, such as pollution monitor 1707.

As illustrated in Fig. 4C, when the vehicle 1700 is located at one of a multiplicity of predetermined download locations, such as a suitably equipped filling station, on-board communicator 1708 downloads data stared in memory 1706 relating to vehicle operations over a time preferably extending since a previous download, typically in a wireless manner, to intermediate storage and communication unit 1712. The intermediate storage and communication unit 1712 includes a receiver or transceiver 2006 which interfaces with a CPU 2008. The CPU 2008 interfaces with a memory 2010 which stores data relating to vehicle operations in respect of a multiplicity of vehicles and with a communicator 2012, which communicates this data, in a composite message, preferably in a wireless manner to central unit 1710.

Central unit 1710 preferably includes is receiver or transceiver 2014 which interfaces with a CPU 2016. The CPU 2016 in turn interfaces with a database 2018. The database accumulates the content of the composite messages received by the central unit 1710 and supplies this content in an appropriate form to a billing system 2020.

Additionally or alternatively, communicator 1708 may communicate directly with the central unit 1710, by passing the intermediate storage and communication unit 1712. In such a case, units 1712 may be obviated.

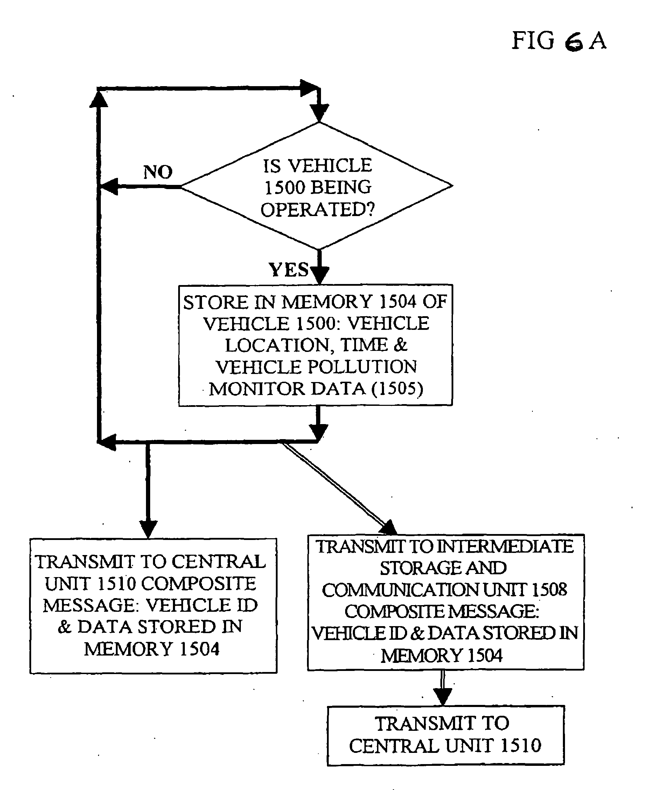

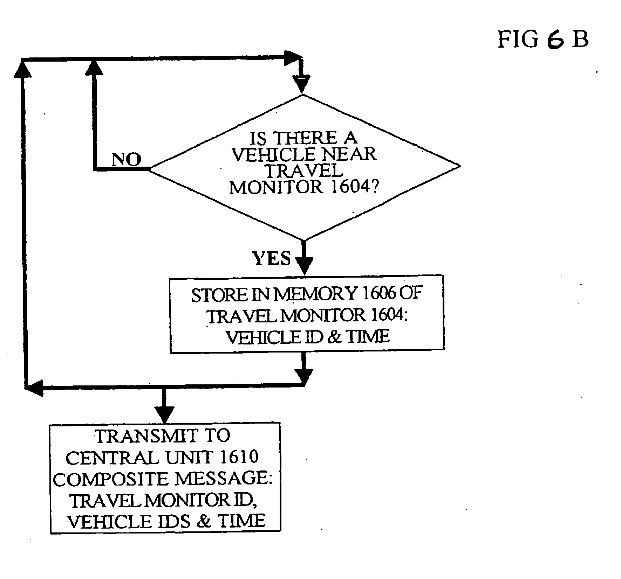

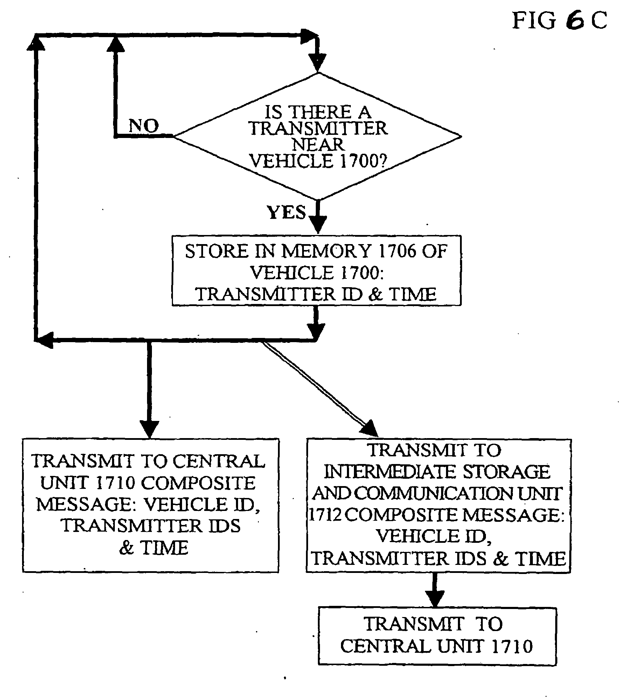

Reference is now made to Figs. 6A, 6B and 6C which are simplified flow charts illustrating the operation of vehicle fee payment systems and methodologies of Figs. 4A and 5A, 4B and 5B and 4C and 5C

Turning now to Fig. 6A, it is seen that a determination of the location of vehicle 1500 is made repeatedly and the location of the vehicle 1500 as a function of time is stored in memory 1504 for such times as the vehicle 1500 is being operated. Preferably, an output from a vehicle operation monitor such as pollution monitor 1505 is also stored in the memory.

At any suitable time when the vehicle is located at a suitable download location, whether the vehicle is operating or not operating, the contents of the memory 1504 may be downloaded to the intermediate storage and communication unit 1508 and thence to the central unit 1510. Alternatively or Additionally, the contents of memory 1504 may be downloaded directly to the central unit 1510.

Turning now to Fig. 6B, it is seen that the travel monitors 1604 continuously record the identity of vehicles In predetermined propinquity thereto as well as the time of such propinquity. This information is stored in memories 1606 of monitors 1604.

At any suitable time, the contents of the memories 1,606 may be downloaded to the central unit 1610. which processes them into vehicle specific information useful for billing functionality and supplies the contents of memory 1604 to billing system 1914.

Turning now to Fig. 6C, it is seen that receiver 1702 records instances when vehicle 1700 is in predetermined propinquity to a transmitter 1703 as well as the time of such propinquity. This information is stored in memory 1706.

At any suitable time, the contents of the memories 1706 of vehicles 1700 may be downloaded to the intermediate storage and communication unit 1712 and thence to the central unit 1710. Alternatively or additionally, the contents of memory 1706 may be downloaded directly to the central unit 1710.

It will be appreciated by persons skilled in the art that the present invention is not limited by what has been particularly shown and described hereinabove. Rather the scope of the pyesent invention is determined by the following claims.

## Claims

1. A vehicle-related fee payment system, comprising:
at least one sensor (902) mounted on a vehicle (900) and automatically sensing at least the time during which said vehicle is being operated;
at least one communicator (906) mounted on said vehicle providing an output indicating at least the time during which said vehicle is being operated; and
at least one data processor (910) receiving said output from said at least one communicator, and providing a billing data output in respect of a vehicle-related use fee which is dependent on the time during which said vehicle is being operated,
wherein the only variables sensed by the at least one sensor (902), which are considered in the billing data, are duration of vehicle use and time of day or night of vehicle use.

2. A vehicte-retated fee payment system according to claim 1 and wherein said at least one communicator (906) communicates with said at least one data processor (910) at least partially not in real time.

3. A vehicle-related fee payment system according to either of the preceding claims and wherein said time during which said vehicle is being operated comprises at least one of:
the time duration when the vehicle is being operated; and
the time of day or night when the vehicle is being operated.

4. A vehicte-related fee payment system according to any of the preceding claims and wherein only said time during which said vehicle is being operated is both provided by said at least one sensor (902) mounted on said vehicle and used by said at least one data processor (910) for providing said billing data output.

5. A vehicle-related fee payment system according to any of the preceding claims and also comprising at least one intermediate storage and communication unit (908) operative to receive said output from said at least one communicator (906) indicating said time during which said vehicle is being operated and to provide said time during which said vehicle is being operated to said data processor, which is located remotely from said at least one intermediate storage and communication unit (908).

6. A vehicle-related fee payment system according to claim 5 and wherein at least one intermediate storage and communication unit (908) provide said time during which said vehicle is being operated to said data process (910) in at least one composite message.

7. A vehicle-related fee payment system according to claim 6 and wherein said at least one composite message'includes information relating to multiple vehicles.

8. A vehicle-related fee payment system according to any of claims 5-7 and wherein said at least one communicator (906) communicates with said at least one intermediate storage and communication unit (908) only when said vehicle is in the vicinity of said at least one intermediate storage and communication unit (908).

9. A vehicle-related fee payment system according to any of claim 5-8 and wherein at least one of said at least one intermediate storage and communication unit (908) is located at a vehicle fueling station.

10. A vehicle-related fee payment system according to any of the preceding claims and wherein said at least one sensor (902) is operative independently of a vehicle electrical system of said vehicle. ,

11. A vehicle-related fee payment system according to any of the preceding claims and wherein said at least one data processor (910) comprises a vehicle insurance billing data processor.

12. A vehicle-related fee payment system according to any of the preceding claims and wherein at least one communicator (906) mounted on said vehicle is operative in wireless manner.

13. A vehicle-related fee payment system according to any of the preceding claims and wherein at least one communicator (906) mounted on said vehicle is operative in association with a cellular network.

14. A vehicle-related fee payment system according to any of the preceding claims and wherein said at least one communicator (906) automatically provides said output without requiring operator action.

15. A vehicle-related fee payment method comprising:
employing a vehicle mounted sensor (902) for automatically sensing at least the time during which said vehicle is being operated;
communicating an output indicating at least the time during which said vehicle is being operated; and
receiving said output indicating at least the time during which said vehicle is being operated and providing a billing data output in respect of a vehiele-related use fee which is dependent on the time during which said vehicle is being operated,
wherein the only variables sensed by the sensor (902), which are considered in the billing data are duration of vehicle use and time of day or night of vehicle use.

16. A vehicle-related fee payment method according to claim 15 and wherein said communicating said output is partially not in real time with respect to said sensing.

17. A vehicle-related fee payment method according to either of the claims 15 and 16 and wherein said time during which said vehicle is being operated comprises at least one of:
the time duration when the vehicle is being operated; and
the time of day or night when the vehicle is being operated.

18. A vehicle-related fee payment method according to any of the preceding claims 15-17 and also comprising employing at least one intermediate storage and communication unit (908) to initially receive said output indicating said time during which said vehicle is being operated and thereafter to communicate said output to a data processor (910), located remotely from said at least one intermediate storage and communication unit (908).

19. A vehicle-related fee payment method according to claim 18 and wherein at least one intermediate storage and communication unit (908) communicates said output to said data processor (910) in at least one composite message.

20. A vehicle-related fee payment method according to claim 19 and wherein said at least one composite message includes information relating to multiple vehicles.

21. A vehicle-related fee payment method according to any of claims 18-20 and
wherein said at least one intermediate storage and communication unit (908) receives said output from said vehicle only when said vehicle is in the vicinity of said at least one intermediate storage and communication unit (908).

22. A vehicle-related fee payment method according to any of claim 18-21 and wherein at least one of said at least one intermediate storage and communication unit (908) is located at a vehicle fueling station.

23. A vehicle-related fee payment method according to any of the preceding claims 15-22 and wherein said vehicle mounted sensor (902) is operative independently of a vehicle electrical system of said vehicle.

24. A vehicle-related fee payment method according to any of the preceding claims 15-23 and wherein said billing data output comprises a vehicle insurance billing data output.

25. A vehicle-related fee payment method according to any of the preceding claims 15-24 and wherein said communicating is operative in wireless manner.

26. A vehicle-related fee payment method according to any of the preceding claims 15-25 and wherein said communicating employs a cellular network.

27. A vehicle-related fee payment method according to any of the preceding claims 15-26 and wherein said sensing at least the time during which said vehicle is being operated and said communicating an output indicating at least the time during which said vehicle is being operated does not require operator action.

## Patentansprüche

1. Fahrzeugbezogenes Gebührenzahlungssystem, das Folgendes umfasst:
wenigstens einen Sensor (902), der an einem Fahrzeug (900) montiert ist und automatisch wenigstens die Zeit erfasst, während der das genannte Fahrzeug betrieben wird;
wenigstens einen Kommunikator (906), der an dem genannten Fahrzeug montiert ist und einen Ausgang erzeugt, der wenigstens die Zeit anzeigt, während der das genannte Fahrzeug betrieben wird; und
wenigstens einen Datenprozessor (910), der den genannten Ausgang von dem genannten wenigstens einen Kommunikator empfängt und einen Fakturierungsdatenausgang in Bezug auf eine fahrzeugbezogene Gebrauchsgebühr erzeugt, die von der Zeit abhängig ist, während der das genannte Fahrzeug betrieben wird,
wobei die einzigen von dem wenigstens einen Sensor (902) erfassten Variablen, die in den Fakturierungsdaten berücksichtigt werden, die Dauer des Fahrzeuggebrauchs sowie die Tages- oder Nachtzeit des Fahrzeuggebrauchs sind.

2. Fahrzeugbezogenes Gebührenzahlungssystem nach Anspruch 1, bei dem der genannte wenigstens eine Kommunikator (906) mit dem genannten wenigstens einen Datenprozessor (910) wenigstens teilweise nicht in Echtzeit kommuniziert.

3. Fahrzeugbezogenes Gebührenzahlungssystem nach einem der vorherigen Ansprüche, bei dem die genannte Zeit, während der das genannte Fahrzeug betrieben wird, wenigstens eines der Folgenden beinhaltet:
die Zeitdauer, während der das Fahrzeug betrieben wird; und
die Tages- oder Nachtzeit, zu der das Fahrzeug betrieben wird.

4. Fahrzeugbezogenes Gebührenzahlungssystem nach einem der vorherigen Ansprüche, bei dem nur die genannte Zeit, während der das genannte Fahrzeug betrieben wird, sowohl von dem genannten wenigstens einen an dem genannten Fahrzeug montierten Sensor (902) erzeugt als auch von dem genannten wenigstens einen Datenprozessor (910) zum Erzeugen des genannten Fakturierungsdatenausgangs benutzt wird.

5. Fahrzeugbezogenes Gebührenzahlungssystem nach einem der vorherigen Ansprüche, das auch wenigstens eine Zwischenspeicher- und Kommunikationseinheit (908) mit der Aufgabe umfasst, den genannten Ausgang von dem genannten wenigstens einen Kommunikator (906) zu empfangen, der die genannte Zeit anzeigt, während der das genannte Fahrzeug betrieben wird, und die genannte Zeit, während der das genannte Fahrzeug betrieben wird, zu dem genannten Datenprozessor zu senden, der sich ortsfern von der genannten wenigstens einen Zwischenspeicher- und Kommunikationseinheit (908) befindet.

6. Fahrzeugbezogenes Gebührenzahlungssystem nach Anspruch 5, bei dem wenigstens eine Zwischenspeicher- und Kommunikationseinheit (908) die genannte Zeit, während der das genannte Fahrzeug betrieben wird, dem genannten Datenprozessor (910) in wenigstens einer zusammengesetzten Meldung sendet.

7. Fahrzeugbezogenes Gebührenzahlungssystem nach Anspruch 6, bei dem die genannte wenigstens eine zusammengesetzte Meldung Informationen über mehrere Fahrzeuge beinhaltet.

8. Fahrzeugbezogenes Gebührenzahlungssystem nach einem der Ansprüche 5-7, bei dem der genannte wenigstens eine Kommunikator (906) mit der genannten wenigstens einen Zwischenspeicher- und Kommunikationseinheit (908) nur dann kommuniziert, wenn sich das genannte Fahrzeug in der Nähe der genannten wenigstens einen Zwischenspeicher- und Kommunikationseinheit (908) befindet.

9. Fahrzeugbezogenes Gebührenzahlungssystem nach einem der Ansprüche 5-8, bei dem sich wenigstens eine der genannten wenigstens einen Zwischenspeicher- und Kommunikationseinheiten (908) an einer Fahrzeugbetankungsstation befindet.

10. Fahrzeugbezogenes Gebührenzahlungssystem nach einem der vorherigen Ansprüche, bei dem der genannte wenigstens eine Sensor (902) unabhängig von einem elektrischen System des genannten Fahrzeugs arbeiten kann.

11. Fahrzeugbezogenes Gebührenzahlungssystem nach einem der vorherigen Ansprüche, bei dem der genannte wenigstens eine Datenprozessor (910) einen Fahrzeugversicherungs-Fakturierungsdatenprozessor umfasst.

12. Fahrzeugbezogenes Gebührenzahlungssystem nach einem der vorherigen Ansprüche, bei dem wenigstens ein an dem genannten Fahrzeug montierter Kommunikator (906) drahtlos arbeitet.

13. Fahrzeugbezogenes Gebührenzahlungssystem nach einem der vorherigen Ansprüche, bei dem wenigstens ein an dem genannten Fahrzeug montierter Kommunikator (906) in Assoziation mit einem zellularen Netz arbeitet.

14. Fahrzeugbezogenes Gebührenzahlungssystem nach einem der vorherigen Ansprüche, bei dem der genannte wenigstens eine Kommunikator (906) den genannten Ausgang automatisch erzeugt, ohne eine Bedieneraktion zu erfordern.

15. Fahrzeugbezogenes Gebührenzahlungsverfahren, das die folgenden Schritte beinhaltet:
Verwenden eines am Fahrzeug montierten Sensors (902) zum automatischen Erfassen wenigstens der Zeit, während der das genannte Fahrzeug betrieben wird;
Übermitteln eines Ausgangs, der wenigstens die Zeit anzeigt, während der das genannte Fahrzeug betrieben wird; und
Empfangen des genannten Ausgangs, der wenigstens die Zeit anzeigt, während der das genannte Fahrzeug betrieben wird, und Erzeugen eines Fakturierungsdatenausgangs in Bezug auf die fahrzeugbezogene Gebrauchsgebühr, die von der Zeit abhängig ist, während der das genannte Fahrzeug betrieben wird, wobei die einzigen vom Sensor (902) erfassten Variablen, die in den Fakturierungsdaten berücksichtigt werden, die Dauer des Fahrzeuggebrauchs sowie die Tages- oder Nachtzeit des Fahrzeuggebrauchs sind.

16. Fahrzeugbezogenes Gebührenzahlungsverfahren nach Anspruch 15, bei dem die genannte Übermittlung des genannten Ausgangs teilweise nicht in Echtzeit mit Bezug auf die genannte Erfassung erfolgt.

17. Fahrzeugbezogenes Gebührenzahlungsverfahren nach Anspruch 15 oder 16, bei dem die genannte Zeit, während der das genannte Fahrzeug betrieben wird, wenigstens eines der Folgenden beinhaltet:
die Zeitdauer, während der das Fahrzeug betrieben wird; und
die Tages- oder Nachtzeit, zu der das Fahrzeug betrieben wird.

18. Fahrzeugbezogenes Gebührenzahlungsverfahren nach einem der vorherigen Ansprüche 15-17, das auch die Anwendung von wenigstens einer Zwischenspeicher- und Kommunikationseinheit (908) beinhaltet, um zunächst den genannten Ausgang zu empfangen, der die genannte Zeit anzeigt, während der das genannte Fahrzeug betrieben wird, und danach den genannten Ausgang zu einem Datenprozessor (910) zu übertragen, der sich ortsfern von der genannten wenigstens einen Zwischenspeicher- und Kommunikationseinheit (908) befindet.

19. Fahrzeugbezogenes Gebührenzahlungsverfahren nach Anspruch 18, bei dem wenigstens eine Zwischenspeicher- und Kommunikationseinheit (908) den genannten Ausgang zu dem genannten Datenprozessor (910) in wenigstens einer zusammengesetzten Meldung übermittelt.

20. Fahrzeugbezogenes Gebührenzahlungsverfahren nach Anspruch 19, bei dem die genannte wenigstens eine zusammengesetzte Meldung Informationen über mehrere Fahrzeuge beinhaltet.

21. Fahrzeugbezogenes Gebührenzahlungsverfahren nach einem der Ansprüche 18-20, bei dem die genannte wenigstens eine Zwischenspeicher- und Kommunikationseinheit (908) den genannten Ausgang von dem genannten Fahrzeug nur dann empfängt, wenn sich das genannte Fahrzeug in der Nähe der genannten wenigstens einen Zwischenspeicher- und Kommunikationseinheit (908) befindet.

22. Fahrzeugbezogenes Gebührenzahlungsverfahren nach einem der Ansprüche 18-21, bei dem sich wenigstens eine der genannten wenigstens einen Zwischenspeicher- und Kommunikationseinheiten (908) an einer Fahrzeugbetankungsstation befindet.

23. Fahrzeugbezogenes Gebührenzahlungsverfahren nach einem der vorherigen Ansprüche 15-22, bei dem der genannte am Fahrzeug montierte Sensor (902) unabhängig von einem elektrischen System des genannten Fahrzeugs arbeitet.

24. Fahrzeugbezogenes Gebührenzahlungsverfahren nach einem der vorherigen Ansprüche 15-23, bei dem der genannte Fakturierungsdatenausgang einen Fahrzeugversicherungs-Fakturierungsdatenausgang umfasst.

25. Fahrzeugbezogenes Gebührenzahlungsverfahren nach einem der vorherigen Ansprüche 15-24, bei dem die genannte Kommunikation drahtlos erfolgt.

26. Fahrzeugbezogenes Gebührenzahlungsverfahren nach einem der vorherigen Ansprüche 15-25, bei dem die genannte Kommunikation über ein zellulares Netz erfolgt.

27. Fahrzeugbezogenes Gebührenzahlungsverfahren nach einem der vorherigen Ansprüche 15-26, bei dem die genannte Erfassung wenigstens der Zeit, während der das genannte Fahrzeug betrieben wird, und die genannte Übermittlung eines Ausgangs, der wenigstens die Zeit anzeigt, während der das genannte Fahrzeug betrieben wird, keine Bedieneraktion erfordern.

## Revendications

1. Système de paiement de redevance pour véhicules, comprenant :
au moins un capteur (902) monté sur un véhicule (900) et qui détecte automatiquement au moins la durée pendant laquelle ledit véhicule est en exploitation ;
au moins un communicateur (906) monté sur ledit véhicule et fournissant une sortie laquelle indique au moins la durée pendant laquelle ledit véhicule est en exploitation ; et
au moins un processeur (910) de données qui reçoit ladite sortie en provenance dudit au moins un communicateur, et qui fournit une sortie de données de facturation en ce qui concerne la redevance d'utilisation d'un véhicule laquelle est tributaire de la durée pendant laquelle ledit véhicule est en exploitation,
alors que les seules variables détectées par ledit au moins un capteur (902), lesquelles sont prises en considération dans les données de facturation, sont les durées d'utilisation du véhicule ainsi que les horaires diurnes ou nocturnes de l'utilisation du véhicule.

2. Système de paiement de redevance pour véhicules selon la revendication 1, ledit au moins un communicateur (906) assurant la communication avec ledit au moins un processeur (910) de données au moins partiellement pas en temps réel.

3. Système de paiement de redevance pour véhicules selon l'une ou l'autre des revendications précédentes, ladite durée pendant laquelle ledit véhicule est en exploitation comprenant au moins l'un des éléments suivants :
l'intervalle de temps durant lequel le véhicule est en exploitation ; et
l'heure du jour ou de la nuit à laquelle le véhicule est en exploitation.

4. Système de paiement de redevance pour véhicules selon l'une quelconque des revendications précédentes, seule ladite durée pendant laquelle ledit véhicule est en exploitation étant fournie à la fois par au moins un capteur (902) monté sur ledit véhicule et utilisée par ledit au moins un processeur (910) de données afin de procurer ladite sortie de données de facturation.

5. Système de paiement de redevance pour véhicules selon l'une quelconque des revendications précédentes, et comprenant au moins une unité intermédiaire (908) de stockage et de communication laquelle fonctionne pour recevoir ladite sortie à partir dudit au moins un communicateur (906) qui indique ladite durée pendant laquelle ledit véhicule est en exploitation, et pour acheminer ladite durée pendant laquelle ledit véhicule est en exploitation audit processeur de données, ce dernier étant positionné à distance de ladite au moins une unité intermédiaire (908) de stockage et de communication.

6. Système de paiement de redevance pour véhicules selon la revendication 5, ladite au moins une unité intermédiaire (908) de stockage et de communication acheminant ladite durée pendant laquelle ledit véhicule est en exploitation audit processeur (910) de données dans le cadre d'au moins un message composite.

7. Système de paiement de redevance pour véhicules selon la revendication 6, ledit au moins un message composite incluant des informations relatives à une multiplicité de véhicules.

8. Système de paiement de redevance pour véhicules selon l'une quelconque des revendications 5 à 7, ledit au moins un communicateur (906) communiquant avec ladite au moins une unité intermédiaire (908) de stockage et de communication uniquement lorsque ledit véhicule se trouve dans le voisinage de ladite au moins une unité intermédiaire (908) de stockage et de communication.

9. Système de paiement de redevance pour véhicules selon l'une quelconque des revendications 5 à 8, une au moins de ladite au moins une unité intermédiaire (908) de stockage et de communication étant positionnée au niveau d'une station-service pour véhicules.

10. Système de paiement de redevance pour véhicules selon l'une quelconque des revendications précédentes, ledit au moins un capteur (902) fonctionnant de façon indépendante par rapport à un circuit électrique dudit véhicule.

11. Système de paiement de redevance pour véhicules selon l'une quelconque des revendications précédentes, ledit au moins un processeur (910) de données comprenant un processeur de données pour la facturation de l'assurance du véhicule.

12. Système de paiement de redevance pour véhicules selon l'une quelconque des revendications précédentes, au moins un communicateur (906) monté sur ledit véhicule pouvant opérer suivant un mode sans fil.

13. Système de paiement de redevance pour véhicules selon l'une quelconque des revendications précédentes, au moins un communicateur (906) monté sur ledit véhicule pouvant opérer en association avec un réseau cellulaire.

14. Système de paiement de redevance pour véhicules selon l'une quelconque des revendications précédentes, ledit au moins un communicateur (906) fournissant automatiquement ladite sortie sans nécessiter l'intervention d'un opérateur.

15. Procédé de paiement de redevance pour véhicules comprenant les étapes consistant à :
employer un capteur (902) monté sur véhicule pour détecter automatiquement la durée pendant laquelle ledit véhicule est en exploitation ;
communiquer une sortie qui indique au moins la durée pendant laquelle ledit véhicule est en exploitation ; et
recevoir ladite sortie qui indique au moins la durée pendant laquelle ledit véhicule est en exploitation et fournir une sortie de données de facturation relative à la redevance d'utilisation d'un véhicule laquelle est tributaire de la durée pendant laquelle ledit véhicule est en exploitation, alors que les seules variables détectées par le capteur (902), lesquelles sont prises en considération dans les données de facturation, sont les durées d'utilisation du véhicule ainsi que les horaires diurnes ou nocturnes pour l'utilisation du véhicule.

16. Procédé de paiement de redevance pour véhicules selon la revendication 15, ladite communication de ladite sortie ne se faisant partiellement pas en temps réel en ce qui concerne ladite action de détection.

17. Procédé de paiement de redevance pour véhicules selon l'une ou l'autre des revendications 15 et 16, ladite durée pendant laquelle ledit véhicule est en exploitation comprenant au moins l'un des éléments suivants :
l'intervalle de temps durant lequel le véhicule est en exploitation ; et
l'heure du jour ou de la nuit à laquelle le véhicule est en exploitation.

18. Procédé de paiement de redevance pour véhicules selon l'une quelconque des revendications précédentes 15 à 17, comportant l'emploi d'au moins une unité intermédiaire (908) de stockage et de communication afin de recevoir initialement ladite sortie qui indique ladite durée pendant laquelle ledit véhicule est en exploitation et ultérieurement de communiquer ladite sortie à un processeur (910) de données, ce dernier étant positionné à distance de ladite au moins une unité intermédiaire (908) de stockage et de communication.

19. Procédé de paiement de redevance pour véhicules selon la revendication 18, au moins une unité intermédiaire (908) de stockage et de communication communiquant ladite sortie audit processeur (910) de données dans le cadre d'au moins un message composite.

20. Procédé de paiement de redevance pour véhicules selon la revendication 19, ledit au moins un message composite incluant des informations relatives à une multiplicité de véhicules.

21. Procédé de paiement de redevance pour véhicules selon l'une quelconque des revendications 18 à 20, ladite au moins une unité intermédiaire (908) de stockage et de communication recevant ladite sortie en provenance dudit véhicule uniquement lorsque ledit véhicule se trouve dans le voisinage de ladite au moins une unité intermédiaire (908) de stockage et de communication.

22. Procédé de paiement de redevance pour véhicules selon l'une quelconque des revendications 18 à 21, une au moins de ladite au moins une unité intermédiaire (908) de stockage et de communication étant positionnée au niveau d'une station-service pour véhicules.

23. Procédé de paiement de redevance pour véhicules selon l'une quelconque des revendications précédentes 15 à 22, ledit capteur (902) monté sur véhicule fonctionnant de façon indépendante par rapport à un circuit électrique dudit véhicule.

24. Procédé de paiement de redevance pour véhicules selon l'une quelconque des revendications précédentes 15 à 23, ladite sortie de données de facturation comprenant une sortie de données pour la facturation de l'assurance du véhicule.

25. Procédé de paiement de redevance pour véhicules selon l'une quelconque des revendications précédentes 15 à 24, ladite opération de communication étant effectuée suivant un mode sans fil.

26. Procédé de paiement de redevance pour véhicules selon l'une quelconque des revendications précédentes 15 à 25, ladite opération de communication faisant appel à un réseau cellulaire.

27. Procédé de paiement de redevance pour véhicules selon l'une quelconque des revendications précédentes 15 à 26, ladite opération de détection de la durée au moins pendant laquelle ledit véhicule est en exploitation et ladite opération de communication d'une sortie qui indique au moins la durée pendant laquelle ledit véhicule est en exploitation, ayant lieu sans nécessiter l'intervention d'un opérateur.
